# EUROPEAN PATENT APPLICATION

(11) **EP 1 002 748 A1**
(43) Date of publication of application: **24.05.2000**
(21) Application number: 98830700.5
(22) Date of filing: 20.11.1998
(51) Int. Cl.: B65G 57/03, B65G 57/11, B65G 47/53, B65G 13/07, B65B 43/58, B65G 49/06, B65G 47/52

(54) **Device for stacking flat objects**

(71) Applicant: Gomes Technology S.p.A., 41042 Fiorano Modenese (MO) (IT)
(72) Inventor: Mescoli, Giuliano, 41043 Formigine (MO) (IT)
(74) Representative: Gotra, Stefano

(57) **Abstract**

A device for stacking flat objects, in particular ceramic tiles (2), comprises two parallel rows of wheels (5) between which the tiles (2) can advance. The wheels (5) are rotated by flexible transmission organs (10). Each wheel (5) can selectively assume a support position in which it exhibits a peripheral edge (9) on which a side of a tile (2) can rest, and a release position, in which the wheel (5) is displaced downwards and externalwise of the tile (2). By effect of a displacement of the wheels (5), a tile (2), first located in a station (3) for receiving the tile and supported by the wheels (5), is deposited at the top of a stack which is forming in an underlying stacking station (4).

## Description

Specifically, though not exclusively, the invention can be advantageously used for stacking ceramic tiles.

In particular, reference is made to a device comprising a plurality of receiving stations arranged along a transport line, which device is able to feed the objects in an ordered sequence, lying practically flat. The objects can be fed selectively to each station. Vertically beneath each station there is a stacking station in which a pile of objects is formed. The device can selectively form a plurality of piles or stacks at a stacking station. To this end, a transfer device is predisposed at each receiving station, which transfer device can singly take the objects fed to the station and deposit them, one by one, on the top of an underlying stack of objects. The stack rests on a mobile plane which can on command move step-by-step vertically downwards, its action co-ordinated with that of the transfer apparatus. During functioning, after an object has been placed at the top of the currently-forming pile, the pile is lowered by one step, equal to the height of an object, so that at the moment the object is deposited the top of the stack is in the same position as before.

The prior art teaches a device of the above-described type, used in particular for stacking ceramic tiles, in which the tiles can be fed to the various stations in a horizontal advancement direction, by means of two mobile conveyor chain belts which laterally grip opposite sides of the tiles. The chains are pressed against the sides of the advancing tiles by mechanical pressing organs. The tiles are supported by the grip exerted against their sides. Once positioned exactly vertically above the pre-selected stack, the tile is detached from the chains and transferred to the top of the underlying forming stack by a downwards-directed pressing action, exerted by a plurality of expulsor pneumatic cylinders.

Obviously the entity of the downwards pressing action must be sufficient to overcome the lateral gripping force being exerted on the sides of the tiles.

The above-cited prior art has certain drawbacks. Firstly, the tiles which are deposited on the top of the stack strike with a certain violence against the underlying tile, with a consequent risk of damage or breakage of the tiles. This is mainly due to the fact that in order to disengage the tiles from the grip of the chains, the pressure in the expulsion cylinder has to reach relatively high levels; as soon as the cylinders succeed in disengaging the tiles, suddenly finding no resistance from the gripping chains, they impress a considerable acceleration on the tile in its downward journey. The consequent impact with the underlying tile can in some cases cause damage to one or both tiles.

Secondly, the action of detachment operated by the expulsor cylinders leads to considerable wear on the chains. The wear is the greater the heavier the tiles supported thereby are, as the increase in tile weight increases the gripping force needed to grip the tiles. Chain wear is further exacerbated in the not-infrequent case that the tile material is especially abrasive. Furthermore, the expulsor cylinders too are subject to considerable wear on their mobile parts and seals, mainly due to the lateral loads they are subject to during functioning. Frequent maintenance of the chains and cylinders is needed, with an ensuing increase in production costs, both for exchange parts and for numerous stoppages of the stacking device and thus the production line it is part of.

A further drawback in known devices is their poor adaptability to the inevitable size difference between one tile and another in relation to the rated sizes. Side-acting gripping chains, provided to act on tiles of a predetermined width, cannot operate on a tile which deviates excessively from the rated dimensions.

The main aim of the present invention is to obviate the above-cited limitations and drawbacks in the prior art, by providing a device which is constructionally simple and economical and which is nonetheless able to form stacks of objects with no risk of damage to the objects themselves.

An advantage of the present invention is that it provides a device which requires extremely limited maintenance and which involves low working costs.

A further advantage is that it enables the objects to be manipulated with great gentleness, reducing to a minimum the risk of damage thereto.

A still further advantage is that a stacking device is obtained which operates efficiently on the objects even where the objects are of considerably different dimensions in relation to rated sizes.

The technical characteristics of the invention in relation to the above-cited aims and advantages will better emerge from the appended claims.

Further characteristics and advantages of the invention will better emerge from the detailed description that follows, with reference to the accompanying figures, of a non-limiting preferred embodiment thereof, and in which:

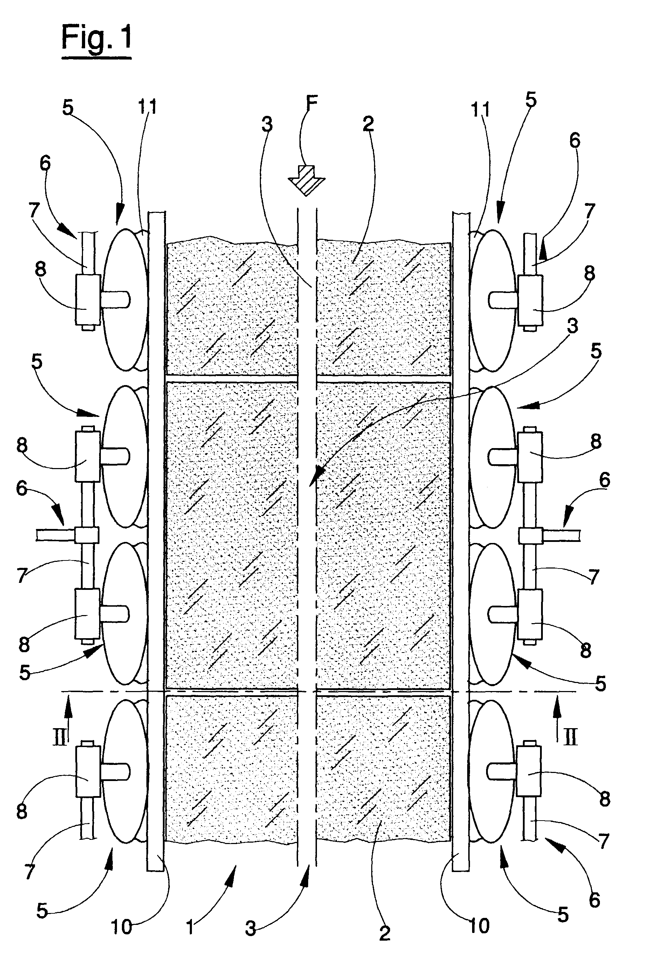

figure 1 is a broken schematic plan view from above of a stacking device according to the invention;
figure 2 is a section according to line II-II of figure 1, showing two functioning phases of the device;
figure 3 shows, in the same section as in figure 2, another two functioning phases of the device of the invention.

With reference to the above-mentioned figures, 1 denotes in its entirety a device for stacking flat objects. In the case in point the objects are constituted by ceramic tiles 2.

The device 1 comprises a transport line feeding the tiles 2 in an ordered horizontal sequence one behind another. In the figures the transport line is only partially illustrated. The tiles 2 advancing along the line are suitably distanced.

Arrow F denotes the horizontal advancement direction of the tiles along the line.

A plurality of upper receiving stations 3 is arranged along the line, which are distanced one from another in the advancement direction F of the tiles. On command, the line can feed and position the tiles selectively at any of the receiving stations 3.

Situated vertically beneath each upper receiving station 3 is a lower stacking station 4 in which a stack of tiles can be formed. The device can form a plurality of tile stacks, each at a single a stacking station 4.

The tile transport, line comprises two rows of wheels 5 for supporting and drawing the tiles. The two rows are arranged parallel one to another and are situated on opposite sides of the various upper stations 3.

Each wheel 5 is rotatably coupled to a support 6 and rotates about an axis x-x. In the illustrated example each receiving station 3 is associated to a support 6 on either side and each support rotatably supports two wheels 5 situated side-by-side. Obviously, according to the tile format, each upper station could be provided with more than one wheel support, or more than one wheel can be coupled on each support 6.

The distance between two adjacent wheels 5 in direction F is adjustable. Each support 6 is provided with a straight sliding guide 7, parallel to direction F, to which at least one cursor 8 is slidably coupled. Each cursor 8, which rotatably bears a wheel 5, can be positioned along the sliding guide 7.

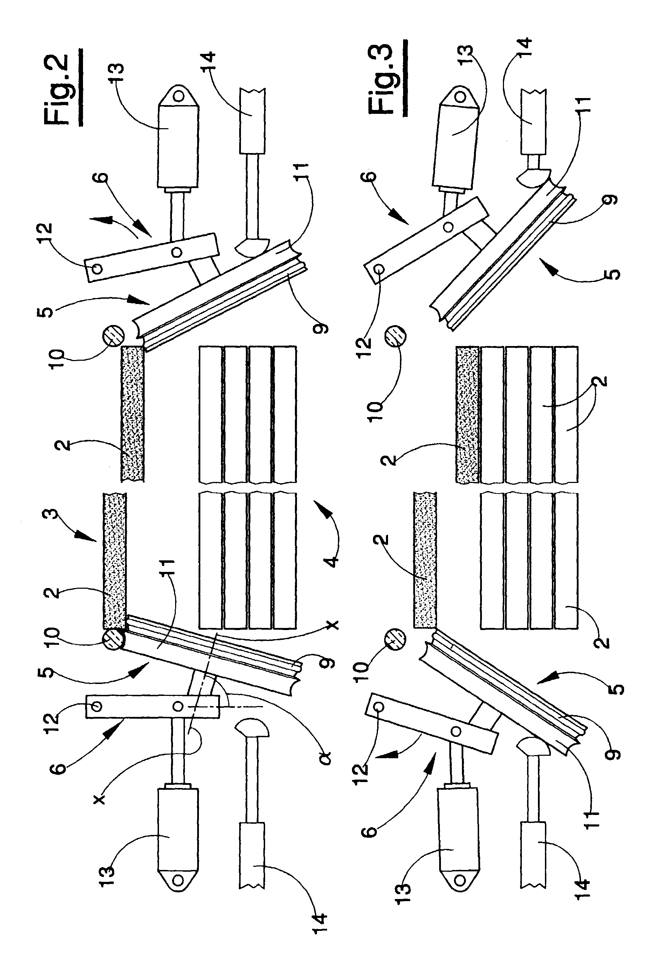

On command, each wheel 5 can selectively assume at least an upper support position (on the left in figure 2), and at least a lower release position (on the right in figure 3). In the support position each wheel has on a rest edge 9 thereof an upper point on which a side of a tile 2 can rest. In the support position the upper rest points of the wheels in a row identify a rest plane for a side of a tile, while the upper rest points of the wheels in the opposite row identify another rest plane for the opposite side of the tiles. By virtue of this arrangement the wheels 5, when in the support position, can cooperate to support a tile.

In the release position each wheel 5 exhibits an upper rest point which is displaced downwards and laterally towards the outside of the relative stacking station 4. In this position the wheels 5 do not interfere with the tile or tiles forming the stack.

In the support position the wheels 5 are arranged obliquely so that their upper rest points are displaced internalwards of the relative upper station 3. Angle alpha of wheel inclination, which in the illustrated case is about 75°, is adjustable.

The transport line is provided with means for commanding the coordinated rotation of the wheels 5, arranged in the support position, about their axes x-x.

The means for commanding comprise, for each row of wheels 5, a flexible organ 10 for transmitting motion coupled to an edge 11 which draws the wheels of a row. The drawing edge 11 exhibits a gullet in which a flexible organ 10 can be engaged. The two flexible organs 10 are powered by a motor, not illustrated, and transmit the drive to the various wheels 5 in the relative rows.

The drawing edge 11 of each wheel is side-by-side to the rest edge 9 and is arranged with respect thereto externalwise of the stations 3. Thanks to the rotation about their own axes x-x, the wheels 5 can support and draw the tiles 2 in advancement direction F.

Each wheel-bearing support 6 can on command be displaced along a vertical plane transversally to the tile advancement direction. In the illustrated case these displacements are made possible by virtue of the fact that each support 6 is constrained to a fixed frame, not illustrated, and can rotate about a pivot 12 having an axis parallel to tile advancement direction F. The pivots 12 are arranged externally of the transport line and superiorly to the wheels 5.

The above-mentioned displacements of the supports 6 enable the wheels 5 to move from the support position into the release position, and vice versa. A tile 2, positioned in a predetermined station 3, is supported at opposite sides thereof by the wheels 5 associated to the station 3 and arranged in the support position. By effect of a coordinated displacement of the wheels 5 towards the lower release position, the tile 2 can be deposited at the top of the forming stack in the underlying stacking station 4.

The displacement of the wheels 5 from one position to another, and vice versa, is performed by means of fluid-activated linear actuators 13 each having one end hinged to the fixed frame and an opposite end hinged to a relative wheel-bearing support 6.

The device 1 further comprises means for controlled braking of the wheel displacement from the support position to the release position. The means for braking comprise, in the illustrated example, a pneumatic braking cylinder 14 associated operatively to each wheel 5 and having a mobile stem with one end, preferably rounded, destined to interact contactingly with the wheel 5. When the wheels 5 are displacing towards the release position and come into contact with the rounded ends of the braking cylinder 14, the wheels' 5 run is slowed down so that the speed of the tile 2, at the moment the tile 2 is released by the rest edge 9 of the wheels 5, is almost zero, or at least very low.

A mobile rest plane of known type operates at each stacking station 4, for bearing a stack of tiles. On command the rest plane can descend vertically step-by-step in synchrony with the wheel release. The entity of the step is substantially the same as the height of a tile, so that each time a new tile arrives the top of the stack is more or less in the same position as it was in before the arrival of the preceding tile.

The device functioning will now be described.

By means of a command and control unit of known type, a preferred receiving station 3 is selected, and, by implication, a stacking station 4. The selection is made, for example, on the basis of the type of tile to be stacked.

The transport line feeds the tiles 2 in succession to the pre-selected station 3.

The tiles are drawn by the wheels 5, in the support position, which are in turn rotated by the flexible transmission organs 10. When the tile is correctly positioned (sensors, not illustrated and of known type, can be used for this operation), the two linear actuators 13 are commanded to displace downwards towards the release position only those wheels 5 which support the tile on both sides. The displacement consists, as mentioned, in a rotation about the upper pivot 12. In figure 2, on the left, the wheel is illustrated in the support position, while on the right the opposite wheel is illustrated, already a little displaced downwards, in an intermediate position bin which it still grips the tile but is no longer engaged by the flexible drawing organ 10. In this position, as illustrated, the wheel 5 meets the end of the relative cylinder 14 which thus begins its braking action.

In figure 3, on the left, a subsequent phase of the tile deposit is illustrated, in which the wheels 5 displace further downwards and externalwise and the tile, still supported by the wheels 5, is even closer to the top of the underlying stack.

The stem of the cylinder 14 is partially retracted and the wheel 5, still in contact with the end of the cylinder 14 stem, has slowed its run due to the interaction with the stem itself. At the moment the wheels 5 release the tile to fall by force of gravity on to the underlying stack, the tile 2 is travelling very slowly, and the distance between the tile and the top of the stack is very small, so that the operation is very delicately done. In figure 3, the tile is already on top of the stack and the wheels are completely external of the stacking station 4 and do not interfere with the tiles.

Starting from this position, the wheels 5 can be commanded to return towards the support position without contacting the tile stack. The rest plane is made to lower by a step which is equal to the height of a tile. The wheels 5, once returned into the upper support position, where their drawing edge 11 is engaged with the flexible drawing organ, can draw a new tile 2 into the station 3 for the next tile stacking operation.

## Claims

1. A device for stacking flat objects, comprising:
a transport line, able to feed the objects (2), lying horizontally, in an ordered succession;
a plurality of stations (3) for receiving the objects, predisposed along the transport line and distanced one from another, the objects (2) being selectively positionable at each of said receiving stations (3);
a plurality of stacking stations (4), one for each station (3) and located there-beneath, in which a stack of objects (2) can be formed;
a mobile rest plane for each stacking station (4), on which the objects (2) arriving at a station (3) will be deposited one by one, forming a stack resting on the mobile rest plane, which mobile rest plane can upon command perform vertically descending step displacements in synchrony with a one-by-one depositing of the objects (2), an entity of the step-by-step displacement being equal to a height of the objects (2) being deposited;
characterised in that said object transport line comprises:
two parallel lines of wheels (5), situated on opposite sides of the transport line, each wheel on command being able selectively to assume at least an upper support position and at least a lower release position; in the upper support position each wheel (5) exhibits on a rest edge (9) thereof an upper point on which a side of an object (2) can rest; in the upper support position (5) the upper rest points of one of the rows of wheels (5) identify a rest plane for one side of an object (2), while the upper rest points of the opposite line of wheels (5) identify a further rest plane for the opposite side of the objects (2), so that in the support position the wheels (5) can cooperate to support and transport an object (2); in the release position the upper rest point of each wheel (5) is displaced downwards and laterally externalwise of the stacking stations (4) so as not to interfere with the object (2);
means for commanding a coordinated rotation of the wheels (5), when arranged in the support position, about an axis (x-x) thereof, an object (2) supported by the wheels (5) being made to advance by virtue of said rotation;
means for commanding a coordinated displacement of at least a part of the lines of wheels (5) from the support position into the release position, so moving an object (2) previously located in a predetermined receiving station (3) on to a top of a stack forming in an underlying stacking station (4).

2. The device of claim 1, characterised in that the wheels (5) in the support position, are arranged obliquely in such a way that the upper rest points are displaced internalwards of the station (3).

3. The device of claim 1 or 2, characterised in that each of said wheels (5) is rotatably coupled to a support (6) able on command to displace along a vertical plane arranged transversally to an advancement direction (F) of the objects (2) along the transport line.

4. The device of claim 3, characterised in that said support (6) is constrained to rotate about a pivot (12) having an axis parallel to said object advancement direction (F).

5. The device of claim 3 or 4, characterised in that a plurality of wheels (5) is coupled to each support (6).

6. The device of any one of the preceding claims, characterised in that said means for commanding a rotation of the wheels (5) about axes (x-x) thereof comprise a flexible transmission organ (10) of the drive coupled to a drawing edge (11) of the wheels (5) in a row of wheels (5), said drawing edge (11) being placed side-by-side with the rest edge (9) and arranged with respect thereto externalwise of the transport line.

7. The device of any one of the preceding claims, characterised in that it comprises means (14) for controlled braking of the wheels (5) during displacement thereof from the support position into the release position.

8. The device of any one of the preceding claims, characterised in that said flat objects are ceramic tiles (2).
